Europäisches Patentamt

European Patent Office

Office européen des brevets

(11) Publication number: **0 422 289 A1**

# EUROPEAN PATENT APPLICATION

(21) Application number: **89202528.9**

(22) Date of filing: **08.10.89**

(51) Int. Cl.⁵: **G01G 19/02, G01G 21/22**

(43) Date of publication of application:
**17.04.91 Bulletin 91/16**

(84) Designated Contracting States:
**AT BE CH DE ES FR GB GR IT LI LU NL SE**

(71) Applicant: **EERSTE NEDERLANDSE FABRIEK VAN WEEGWERKTUIGEN JAN MOLENSCHOT & ZOON B.V.**
**Postbus 3246**
**NL-4800 DE Breda(NL)**

(72) Inventor: **Van Leijsen, Cornelis Gerardus Rumoldus**
**Papaverstraat 1**
**NL-5102 ZE Dongen(NL)**

(74) Representative: **Van Assen, Jan Willem Bernard**
**Octrooibureau van Assen Assenpatent B.V.**
**Postbox 1029 Konijnenlaan 22**
**NL-2240 BA Wassenaar(NL)**

(54) **Prefabricated and dismountable weighbridge.**

(57) A prefabricated reinforced-concrete dismountable weighbridge for weighing vehicles and which can be installed, used, dismounted, transported and installed anew.

According to the invention one or more weighing cells (3,4) are arranged continuously in pairs across the width of the weighbridge on each heightened portion (1e,2e) of the horizontal leg (1c,2c) of the 'U' form foundation elements (1,2) having legs of unequal lengths.

For practical purposes, both outer longitudinal sides of the weighbridge are covered off by earth-diverting beams (8) running longitudinally between the 'U' form foundation elements with legs of unequal lengths (1,2). These earth-diverting beams (8) are fixed in the vicinity of the ends with the aid of recess (9) accommodated stud-bolts (10) engaging in screw-threaded bushes (11) in the 'U' form foundation elements (1,2) having legs of unequal length whilst they are aalso fixed at their ends with the aid of horizontal recesse (12) accommodated stud-bolts engaging in in screw-threaded bushes (14) in the long transverse legs (1a) of the 'U' form foundation elements (1,2) having unequal leg lengths in the longitudinal direction.

Fig.3.

## PREFABRICATED REINFORCED-CONCRETE AND DISMOUNTABLE WEIGHBRIDGE FOR WEIGHING VE-HICLES.

The invention relates to a prefabricated and dismountable weighbridge for vehicles provided with a bridge deck assembled from prefabricated concrete elements in which at least at the outer ends of the workfloor short prefabricated concrete foundation elements (1,2) with an unequal cross-section of 'U' form are each placed on its own workfloor (f1,f2) and onto which short prefabricated concrete foundation elements (1.2) a track (5) is arranged and in which the outerside lying longer leg (1a, 2a) of the foundation elements (1,2) abuts the upperside of the track (5).

A weighbridge of this type is known from EP-A-0 321 608. This construction is partially open and built up partially of concrete and partially of steel for certain applications in which the parts are subjected to the effects of both corrosion and fouling.

The object of the invention is to provide a similar dismountable weighbridge of closed construction in reinforced concrete such that on the one hand it is not subject to the effects of corrosion and fouling and on the the other hand requires practically no maintenance.

This object is achieved in the invention inasmuch that one or more weighing cells are fitted to the horizontal leg of the 'U' form foundation elements of unequal cross-section. Further advantageous exemplary embodiments of the invention are described in the claims,

The invention will now be further described with reference to the accompanying drawings of exemplary embodiments of the weigbridge which are to be understood as not limiting the scope of the invention and in which:

Fig.1 shows a longitudinal cross-section along the line I-I of fig. 2 of the weighbridge of the invention.

Fig.2 shows a cross-section along the line II-II of fig. 1.

Fig.3 shows a fragmentary detail in cross-section on a larger scale than that of fig. 1.

Fig.4 shows a fragmentary detail in cross-section on a larger scale than that along line IV-IV of fig. 1.

Fig.5 shows a fragmentary detail of fig. 3 on the same scale as fig.4.

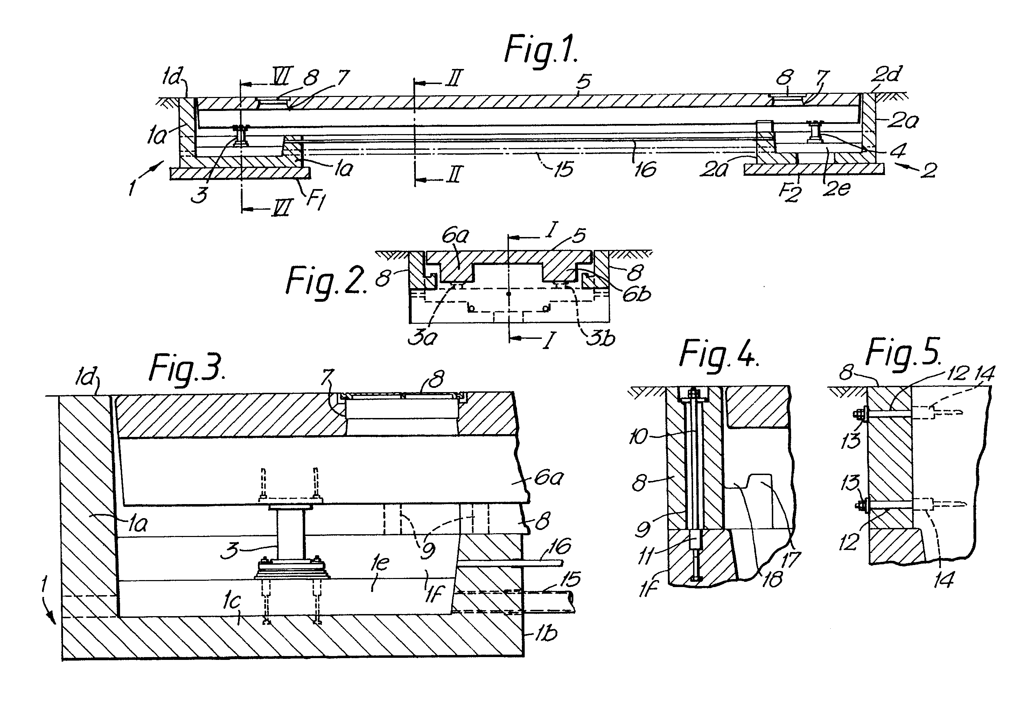

According to the drawings, the weighbridge of the invention comprises a number of prefabricated concrete foundation elements of which only 1 and 2 are visible in fig.1. These elements of 'U' form shown in longitudinal cross-section and generally indicated by the referennce numerals 1 and 2, are fitted to the workfloors (F1,F2) already accomodated in pre-excavated pits in the ground. These workfloors (F1,F2) comprise for example 5 cm. thick slabs of sand or rough concrete. The foundation elements 1 and 2 lying at the outer ends of the weighbridge have legs of unequal lengths with a longer vertical outer leg (1a,2a) and a shorter vertical inner leg (1b, 2b). Dependent on the length of the weighbridge, a number of other central foundation elements (not shown) can be arranged therebetween and which, in contrast, have legs of equal length.

One or more weighing cells 3 are fitted to the horizontal leg (1c,2c). These cells, preferably in groups of two or more cells (3a,3b and 4a,4b respectively), are fitted across the width of the weigbridge to the heigtened portions (1e,2e). The design and construction of the weighing cells (3,4) themselves form no part of the present invention.

Between the long vertical legs (1a,2a) of the foundation elements (1,2), a prefabricated concrete track (5) of extended length is arranged on the weighing cells (3,4). This track (5) has a width smaller than that of the foundation elements (1,2) and forms a track over which the vehicles (not shown) can move onto and over the weighbridge. The upper side of thhe track (5) preferably lies approximately at the same height as the upper surfaces (1d,2d) of the foundation elements (1,2). The underside is strenthened by two longitudinally arranged ribs (6a,6b) the undersides of which rest on the weighing cells (3a,3b). The track (5) is provided with cover (6) provided manholes (7) in the vicinity of the groups of weighing cells (3,4).

Both outer longitudinal sides of the weighbridge are covered off by earth-diverting beams (8) running longitudinally between the 'U' form foundation elements with legs of unequal lenghth (1,2). These earth-diverting beams (8) are fixed in the vicinity of the ends with the aid of vertical recess (9) accommodated stud-bolts (10) engaging in screw-threaded bushes (11) in the transverse legs (1b) and the extended legs (1f) of the 'U' form foundation elements (1,2) having legs of unequal length in the longitudinal direction. Furthermore these earth-diverting beams are fixed at their ends with the aid of in horizontal recesses (12) accommodated stud-bolts (13) engaging in in screw-threaded bushes (14) in the long transverse legs (1a) of the 'U' form foundation elements (1,2) having unequal leg lengths in the longitudinal direction. For pracical purposes a drainage pipe (15)for the discharge of liquid such as rainwater and other solid pollutants is arranged through the short vertical leg (1b,2b) of the 'U' form foundation elements (1,2) having legs of unequal lengths. Also for practical purposes, a conduit (16) for carrying electric cables (not shown) to and from the weighing cells (3,4) is arranged through the short vertical leg (1b,2b) of the 'U' form foundation elements (1,2) having legs of unequal lengths. Furthermore the soil-diverting beams (8), between the 'U' form foundation elements (1,2) having legs of unequal lengths, carry a side-support (17) with a gutter (18) on the inner side.

## Claims

1. A prefabricated and dismountable weighbridge for vehicles provided with a bridge deck on the outer ends of which bridge deck at least short prefabricated concrete foundation elements (1,2) with an unequal cross-section of 'U' form are each placed on its own workfloor (f1,f2) and onto which said short prefabricated concrete foundation elements (1,2) a track (5) is arranged and in which the longer outside lying leg (1a, 2a) of the foundation elements (1,2) abuts the upperside of the track (5) and characterised in this, that one or more weighing cells (3,4) are arranged on the horizontal leg (1c,2c) of the 'U' form foundation elements (1,2) having legs of unequal lengths.

2. A weighbridge as claimed in claim 1 characterised in this, that one or more weighing cells 3 are each arranged on heightened portions (1e,2e) of the horizontal leg (1c.2c) of the of the 'U' form foundation elements having legs of unequal lengths.

3. A weighbridge as claimed in claim 1 or claim 2 characterised in this, that one or more of the weighing cells are arranged in pairs continuously across the width of the weighbridge.

4. A weighbridge as claimed in anyone of claims 1 to 3 inclusive characterised in this, that the outer longitudinal sides of the weighbridge are covered off by earth-diverting beams (8) running longitudinally between the 'U' form foundation elements (1,2) having legs of unequal lengths.

5. A weighbridge as claimed in any one of claims 1 to 4 inclusive characterised in this, that the earth-diverting beams (8) are fixed in the vicinity of the ends with the aid of vertical recess (9) accommodated stud-bolts (10) engaging in screw-threaded bushes (11) in the 'U' form foundation elements (1,2) having legs of unequal lengths.

6. A weighbridge as claimed in any one of claims 1 to 5 inclusive characterised in this, that the earth-diverting beams (8) are fixed in the vicinity of the ends with the aid of recess (9) accommodated stud-bolts (10) engaging in screw-threaded bushes (11) in the 'U' form foundation elements (1,2) having unequal leg lengths.

7. A weighbridge as claimed in anyone of clains 1 to 6 inclusive characterised in this, that the earth-diverting beams are fixed at their ends with the aid of horizontal recess (12) accommodated stud-bolts (13) engaging in in screw-threaded bushes (14) in the long transverse legs (1a) of the 'U' form foundation elements (1,2) having unequal leg lengths in the longitudinal direction.

8. A weighbridge as claimed in any one of clains 1 to 7 inclusive characterised in this, that the track (7) comprises one or more prefabricated reinforced-concrete track elements.

9. A weighbridge as claimed in any one of claims 1 to 8 inclusive characterised in this that the underside of the concrete track (5) is strengthened with longitudinal ribs (6a,6b).

10. A weighbridge as claimed in any one of claims 1 to 9 inclusive characterised in this, that the track (5) is provided with lid (6) covered manholes (7) in the track above th'U' form foundation elements (1,2) with legs of unequal length.

11. A weighbridge as claimed in any one of claims 1 to 10 inclusive characterised in this, that a drainage pipe 15 for the discharge of liquid such as rainwater and other solid pollutants is arranged above the horizontal leg (1c) and through the short vertical leg (1b,2b) of the 'U' form foundation elements (1,2) having legs of unequal leg lengths.

12. A weighbridge as claimed in any one of claims 1 to 10 inclusive characterised in this, that a conduit (16) for carrying electric cables (not shown) to and from the weighing cells (3,4) is arranged through the short vertical leg (1b,2b) of the 'U' form foundation elements (1,2) having legs of unequal length.

13. A weighbridge as claimed in any one of claims 1 to 11 inclusive characterised in this, that the soil-diverting beams (8) between the 'U' form foundation elements (1,2) having legs of unequal lengts carry side-support (17) with a gutter (18) on the inner side.

Fig.1.

Fig.2.

Fig.3.

Fig.4.

Fig.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X,D | EP-A-321608 (METROLOGIE PESAGE INT. S.A.)<br>* column 2, lines 39 - 46; figure 1 * | 1-3, 8 | G01G19/02<br>G01G21/22 |
| Y,D |  | 4-7,<br>9-12 |  |
|  | --- |  |  |
| Y | US-A-3727707 (J.M. MACHALA)<br>* column 6, lines 5 - 17; figures 5, 8 * | 4-7 |  |
|  | --- |  |  |
| Y | GB-A-2065901 (BLATCON LTD)<br>* page 2, lines 26 - 27; figure 13 * | 9 |  |
|  | --- |  |  |
| Y | US-A-4572308 (P.GIESECKE ET AL.)<br>* column 3, lines 44 - 49; figure 4 * | 10 |  |
|  | --- |  |  |
| Y | GB-A-2174211 (HAENNI & CIE AG)<br>* page 2, lines 96 - 99; figure 4 * | 11 |  |
|  | --- |  |  |
| Y | US-A-3123166 (E.W. SCHELLENTRAGER)<br>* column 3, lines 12 - 16 * | 12 |  |
|  | --- |  |  |
| A | DE-A-2615289 (P.A.T. LTD)<br>* page 13, lines 14 - 17; figure 10 * | 4 | TECHNICAL FIELDS SEARCHED (Int. Cl.5 ) |
|  | --- |  |  |
| A | EP-A-97734 (C.SCHENCK AG)<br>* abstract; figures 3-5 * | 1 | G01G |
|  | ----- |  |  |

The present search report has been drawn up for all claims

| Place of search | Date of completion of the search | Examiner |
|---|---|---|
| THE HAGUE | 13 JUNE 1990 | GANCI P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)